# EUROPÄISCHE PATENTSCHRIFT

(11) **EP 3 335 150 B1**
(45) Veröffentlichungstag und Bekanntmachung des Hinweises auf die Patenterteilung: **21.12.2022**
(21) Anmeldenummer: 16758088.5
(22) Anmeldetag: 09.08.2016
(51) Int. Cl.: G06K 7/00, G06K 19/07

(54) **VERFAHREN ZUR INDIVIDUALISIERUNG EINES TRAGBAREN DATENTRÄGERS**
METHOD FOR INDIVIDUALIZING A PORTABLE DATA CARRIER
PROCÉDÉ D'INDIVIDUALISATION D'UN SUPPORT DE DONNÉES PORTABLE

(30) Priorität: 11.08.2015 DE 102015010451
(43) Veröffentlichungstag der Anmeldung: 20.06.2018
(73) Patentinhaber: Giesecke+Devrient Mobile Security GmbH, 81677 München (DE)
(72) Erfinder: TARANTINO, Thomas, 83410 Laufen (DE); BEHLENDORF, Sascha, 85560 Ebersberg (DE); STROBL, Werner, 81927 München (DE); GIL, Rodrigue, 81667 München (DE); GAWLAS, Florian, 80805 München (DE)
(74) Vertreter: Giesecke + Devrient IP
(86) Internationale Anmeldenummer: PCT/EP2016/001366
(87) Internationale Veröffentlichungsnummer: WO 2017/025188

(56) Entgegenhaltungen:
- DE-A1-102005 030 626
- DE-A1-102011 015 710
- US-A1- 2009 198 605
- US-A1- 2015 032 635

## Beschreibung

Die Erfindung betrifft ein Verfahren zur Individualisierung eines tragbaren Datenträgers.

Die Funktionalitäten von tragbaren Datenträgern und insbesondere von Chipkarten (wie z.B. Kreditkarten) werden in der Regel bei der Herstellung beim Kartenhersteller unwiderruflich festgelegt. Eine nachträgliche Individualisierung dieser Karten durch den Benutzer ist somit nicht möglich. Im Besonderen können Chipkarten nicht nach spezifischen Benutzerwünschen in ihrer optischen Erscheinung sowie in sicherheitsrelevanten Funktionen angepasst werden und es besteht auch nicht die Möglichkeit, nachträglich aktualisierten Daten, wie z.B. eine aktualisierte Software, auf die Karte einzuspielen. In der Druckschrift US 7,628,322 B2 ist ein Verfahren zur Personalisierung eines Endgeräts gezeigt, bei dem über einen sicheren Kanal zwischen dem Endgerät und einem Server drahtlos Personalisierungsdaten auf das Endgerät übertragen werden. Hierdurch wird es beispielsweise möglich, das Endgerät für Bezahlvorgänge ähnlich wie eine Kreditkarte zu nutzen.

Aus der Druckschrift DE 10 2005 030626 A1 ist ein Verfahren zur Selbstpersonalisierung eines neutralen Dokuments an einem Lese-/Schreibgerät entnehmbar. Das Dokument ist ein Sicherheitsdokument, auf dem personen- und dokumentbezogene Daten gespeichert sind. Es weist ein IC-Element und ein Anzeigeelement auf. Die Datenübertragung von dem Lese-/Schreibgerät zu dem Dokument kann über eine RFID-Schnittstelle erfolgen. Die beschriebene Lösung unterstützt die korrekte Zuordnung bei der Aufbringung von sichtbaren und elektronischen personenbezogenen Daten auf ein neutrales Ausgangsdokument, indem die personenbezogenen sichtbaren Daten über ein oder mehrere Anzeigeelemente dargestellt werden.

Die Druckschrift US 2015/032635 A1 beschreibt ein System, das ein Ausstellersystem enthält, das über ein Netzwerk Registrierungsinformationen von einem mobilen Gerät empfängt, wobei das Ausstellersystem einem Finanzinstitut zugeordnet ist, das eine Smartcard an einen Benutzer ausgibt und wobei die Registrierungsinformation eine Kennung des Mobiltelefons enthält.

Die Druckschrift US 2009/198605 A1 offenbart eine Anzeige auf einer kontaktlosen Chipkarte, welche als integraler Bestandteil einer sicheren Transaktionsumgebung bereitgestellt wird.

Die DE 10 2011 015710 A1 offenbart ein Verfahren zum Aktualisieren eines in einem Telekommunikationsendgerät eingesetzten Datenträgers im Hinblick auf eine in dem Datenträger ausführbare Datenträgerapplikation.

Aufgabe der Erfindung ist es, eine einfache und schnelle Individualisierung eines tragbaren Datenträgers zu ermöglichen.

Diese Aufgabe wird durch ein Verfahren und ein System gemäß den unabhängigen Patentansprüchen gelöst. Weiterbildungen der Erfindung sind in den abhängigen Ansprüchen definiert.

In dem erfindungsgemäßen Verfahren stellt ein Endgerät Daten zur Konfiguration und/oder Aktualisierung von einer oder mehreren Funktionen des zu individualisierenden tragbaren Datenträgers bereit. Je nach Ausgestaltung kann das Endgerät die Daten selbst erzeugen oder die Daten auch von einer anderen Stelle, z.B. einem Server, empfangen haben. Der Begriff der Funktion ist dabei weit zu verstehen. Insbesondere kann eine Funktion auch die optische Erscheinung des tragbaren Datenträgers betreffen. Das Endgerät ist vorzugsweise ein mobiles Endgerät, das heißt ein Endgerät, das tragbar ist und somit von einem Benutzer mitgeführt werden kann. Vorzugsweise ist das Endgerät ein Mobiltelefon und/oder ein Laptop und/oder ein Tablet. Nichtsdestotrotz kann das Endgerät gegebenenfalls auch ein PC (PC = Personal Computer) sein.

Im erfindungsgemäßen Verfahren werden die Daten, die von dem Endgerät bereitgestellt werden, durch dieses an den tragbaren Datenträger über eine Kommunikationsverbindung zwischen dem Endgerät und dem tragbaren Datenträger übermittelt. Schließlich wird mittels der an den tragbaren Datenträger übermittelten Daten eine Konfiguration und/oder Aktualisierung der Funktion oder Funktionen des tragbaren Datenträgers bewirkt.

Das erfindungsgemäße Verfahren weist den Vorteil auf, dass ein tragbarer Datenträger auf einfache Weise auch nachträglich nach seiner Herstellung mittels eines Endgeräts personalisiert, individualisiert und/oder initialisiert werden kann. Hierdurch können Funktionen des Endgeräts schnell und flexibel eingerichtet bzw. angepasst werden.

Wie bereits erwähnt, wird das erfindungsgemäße Verfahren zur Individualisierung einer Chipkarte, wie z.B. einer Smartcard, genutzt. Die Chipkarte bzw. allgemein der tragbare Datenträger können dabei für verschiedene Zwecke vorgesehen sein. Insbesondere kann der tragbare Datenträger eine Karte zur Durchführung von monetären Transaktionen (z.B. eine Kreditkarte) und/oder eine Karte zur Ticketbuchung (z.B. im öffentlichen Nahverkehr) und/oder eine Karte zur Zugangsberechtigung eines Benutzers sein. Ebenso kann der tragbare Datenträger ein Sicherheitselement sein. Nichtsdestotrotz sind auch andere Anwendungsfälle zum Einsatz des tragbaren Datenträgers denkbar.

In einer besonders bevorzugten Ausführungsform stellt das Endgerät die zu übermittelnden Daten basierend auf einer Eingabe eines Benutzers an einer Benutzerschnittstelle des Endgeräts bereit. Vorzugsweise erfolgt die Eingabe des Benutzers dabei über ein Display (z.B. einen Touch-Screen) und/oder entsprechende Tasten am Endgerät. Über die Eingabe des Benutzers werden die Daten zur Konfiguration und/oder Aktualisierung des oder der Funktionen des tragbaren Datenträgers spezifiziert. Dem Benutzer wird somit die Möglichkeit gegeben, den tragbaren Datenträger nach seinen Wünschen und Vorstellungen geeignet anzupassen. Alternativ oder zusätzlich kann die Eingabe des Benutzers ein Herunterladen der Daten zur Konfiguration und/oder Aktualisierung der Funktion oder Funktionen des tragbaren Datenträgers von einem Server initiieren.

In einer weiteren Variante des erfindungsgemäßen Verfahrens umfassen die bereitgestellten und übermittelten Daten Informationen, welche auf einem Display des tragbaren Datenträgers angezeigt werden. Diese Informationen können z.B. ein oder mehrere Bilder umfassen, wobei die Bilder z.B. individuelle, vom Benutzer des Endgeräts stammende Bilder sein können, deren Übertragung an den tragbaren Datenträger durch den Benutzer veranlasst wurde. Alternativ kann es sich bei den Bildern um Bilder handeln, welche durch den Herausgeber des Datenträgers bereitgestellt werden, insbesondere kann es sich um Bilder handeln, auf denen ein Produkt oder dgl. beworben wird.

Die auf dem Display des tragbaren Datenträgers angezeigten Informationen umfassen auch textuelle Informationen , wobei die textuellen Informationen persönliche Daten eines Benutzers sind, dem der tragbare Datenträger zugeordnet ist. Im Falle einer Karte, mit der monetäre Transaktionen durchgeführt werden können, ist dies der Inhaber der Karte, der über ein entsprechendes Konto bei einem Kreditinstitut verfügt. Die persönlichen Daten des Benutzers können sich z.B. auf den Namen des Benutzers beziehen, so dass bei einer Namensänderung der neue Name auf dem tragbaren Datenträger sichtbar gemacht werden kann. Ebenso können die persönlichen Daten Kontoinformationen des Benutzers (z.B. eine Kontonummer) im Falle einer Karte für monetäre Transaktionen betreffen, wobei mit dem Verfahren die auf der Karte angezeigten Kontoinformationen geändert werden können.

In einer weiteren bevorzugten Ausführungsform wird durch die bereitgestellten und übermittelten Daten die Art der Ausgabe zumindest eines Signals an dem tragbaren Datenträger festgelegt, wobei die Ausgabe des zumindest einen Signals vorzugsweise an ein vorbestimmtes Ereignis gekoppelt ist. Zum Beispiel kann eine Ausgabe des zumindest einen Signals immer dann erfolgen, wenn eine Transaktion durch den tragbaren Datenträger, z.B. eine kontaktlose Transaktion, durchgeführt wurde.

In einer bevorzugten Variante der soeben beschriebenen Ausführungsform wird durch die Daten die Art der Ausgabe von einem oder mehreren akustischen Signalen festgelegt, welche über einen oder mehrere Lautsprecher auf dem tragbaren Datenträger erzeugt werden. Zum Beispiel kann ein Ton bzw. eine Tonfolge und gegebenenfalls auch ein Lied festgelegt werden. Alternativ oder zusätzlich kann durch die Daten auch die Art der Ausgabe von einem oder mehreren optischen Signalen festgelegt werden, welche über ein oder mehrere optische Elemente, z.B. über eine oder mehrere LEDs, auf dem tragbaren Datenträger erzeugt werden. Insbesondere kann z.B. die Abfolge der aufleuchtenden LEDs spezifiziert werden.

In einer weiteren, besonders bevorzugten Ausführungsform umfassen die bereitgestellten und übermittelten Daten eine aktualisierte Software für eine Applikation auf dem tragbaren Datenträger und/oder kryptographische Informationen, wie Sicherheits-Credentials. Ferner können die Daten von einem Herausgeber oder Hersteller des tragbaren Datenträgers stammen. Auf diese Weise wird es z.B. ermöglicht, dass von dem Hersteller bzw. Herausgeber des tragbaren Datenträgers eine aktualisierte Software mittels des Endgeräts auf dem tragbaren Datenträger hinterlegt wird. In diesem Fall betreffen die von dem Endgerät bereitgestellten Daten die aktualisierte Software, die auf das Endgerät von einem entsprechenden Server heruntergeladen wird.

Für die Datenübertragung zwischen dem Endgerät und dem tragbaren Datenträger können unterschiedliche Arten von Kommunikationsverbindungen genutzt werden. In einer bevorzugten Variante wird eine drahtlose Kommunikationsverbindung, z.B. basierend auf Bluetooth bzw. Bluetooth LE (LE = Low Energy), genutzt. Nichtsdestotrotz kann gegebenenfalls auch eine drahtgebundene bzw. kontaktbehaftete Kommunikationsverbindung verwendet werden, z.B. indem der tragbare Datenträger über ein Kabel an das Endgerät angeschlossen wird bzw. indem der tragbare Datenträger in das Endgerät eingeschoben wird und dort mit entsprechenden Kontakten verbunden wird.

Neben dem oben beschriebenen Verfahren betrifft die Erfindung ein System zur Individualisierung eines tragbaren Datenträgers, welcher als Chipkarte ausgebildet ist, umfassend ein Endgerät sowie den zu individualisierenden tragbaren Datenträger. In diesem System ist das Endgerät dazu eingerichtet, Daten zur Konfiguration und/oder Aktualisierung von einer oder mehreren Funktionen des tragbaren Datenträgers bereitzustellen und die Daten an den tragbaren Datenträger über eine Kommunikationsverbindung zwischen dem Endgerät und dem tragbaren Datenträger zu übermitteln. Ferner ist der tragbare Datenträger dazu eingerichtet, die übermittelten Daten zu empfangen und mittels dieser Daten eine Konfiguration und/oder Aktualisierung der Funktion oder Funktionen des tragbaren Endgeräts zu bewirken. Vorzugsweise ist dieses System zur Durchführung einer oder mehrerer bevorzugter Varianten des erfindungsgemäßen Verfahrens eingerichtet.

Die Erfindung betrifft darüber hinaus einen tragbaren Datenträger zur Verwendung in dem erfindungsgemäßen Verfahren bzw. einer oder mehrerer bevorzugter Varianten des erfindungsgemäßen Verfahrens. Der tragbare Datenträger ist dazu eingerichtet, von einem Endgerät Daten zur Konfiguration [weiter mit der ursprünglichen S. 7]
und/oder Aktualisierung von einer oder mehreren Funktionen des tragbaren Datenträgers über eine Kommunikationsverbindung zwischen dem Endgerät und dem tragbaren Datenträger zu empfangen und mittels dieser Daten eine Konfiguration und/oder Aktualisierung der Funktion oder Funktionen des tragbaren Datenträgers zu bewirken.

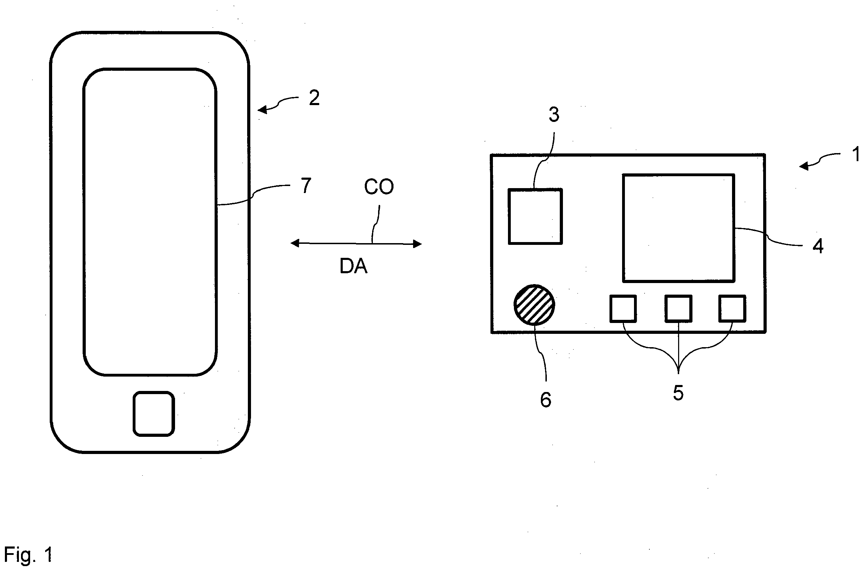

Ausführungsbeispiele der Erfindung werden nachfolgend anhand der beigefügten Fig. 1 detailliert beschrieben. Diese Figur zeigt eine schematische Darstellung, welche die Durchführung einer Variante des erfindungsgemäßen Verfahrens verdeutlicht.

Im Folgenden wird eine Ausführungsform der Erfindung anhand eines tragbaren Datenträgers in der Form einer Chipkarte 1 sowie eines mobilen Endgeräts in der Form eines Smartphones 2 beschrieben. Die Chipkarte 1 umfasst eine Mikroprozessoreinheit, die in einem Chip 3 integriert ist und mit der u.a. Bezahlfunktionalitäten realisiert werden können. In der Karte ist hierzu eine entsprechende Software für solche Bezahlfunktionalitäten hinterlegt. Neben einem Display 4, auf dem unterschiedliche Informationen wiedergegeben werden können, umfasst die Karte 1 ferner drei LEDs 5 zur Ausgabe von optischen Signalen sowie einen Lautsprecher 6 zur Ausgabe von akustischen Signalen.

Die Karte verfügt ferner über eine kontaktlose Schnittstelle, über welche eine drahtlose Kommunikation mit einer entsprechenden Schnittstelle des Telefons 2 aufgebaut werden kann. Die kontaktlosen Schnittstellen der Chipkarte und des Mobiltelefons sind in Fig. 1 nicht separat gezeigt. Die drahtlose Kommunikation zwischen Chipkarte und Telefon kann z.B. auf Bluetooth basieren. Es kann jedoch auch eine andere Kommunikationsart, wie z.B. NFC (NFC = Near Field Communication), zum Einsatz kommen. In dem Szenario der Fig. 1 ist die drahtlose Kommunikationsverbindung zwischen dem Mobiltelefon und der Chipkarte bereits aufgebaut, wie durch einen Doppelpfeil CO angedeutet ist. Über diese Kommunikationsverbindung werden Daten DA von dem Mobiltelefon an die Chipkarte übertragen. Die Daten DA dienen zur Konfiguration bzw. Aktualisierung von Funktionen der Chipkarte, wie weiter unten noch näher erläutert wird.

Das Mobiltelefon 2 verfügt über eine Benutzerschnittstelle, die ein Touch-Display 7 umfasst, über welches ein Benutzer Eingaben am Mobiltelefon machen kann. In der hier beschriebenen Ausführungsform ist auf dem Mobiltelefon eine spezifische Anwendung bzw. App hinterlegt, die der Benutzer über das Display 7 aufrufen kann und welche ein nachträgliche Individualisierung bzw. Personalisierung der Chipkarte 1 bei aufgebauter Kommunikationsverbindung CO ermöglicht. Dabei kann der Benutzer über Eingaben an dem Display 7 bestimmte Funktionalitäten der Karte festlegen. Die den festgelegten Funktionalitäten entsprechenden Daten werden dann über die Kommunikationsverbindung CO an die Chipkarte übertragen. Ferner kann der Benutzer oder eine andere Person über eine Eingabe am Display 7 die Aktualisierung von Daten (z.B. Software) auf der Chipkarte veranlassen, wobei hierfür die Software bzw. die Daten von einem Server an das Mobiltelefon übertragen werden, welches anschließend die Software bzw. die Daten über die Kommunikationsverbindung CO an die Chipkarte 1 übermittelt.

Im Folgenden werden verschiedene Varianten der Individualisierung der Chipkarte 1 beschrieben, wobei gegebenenfalls auch nur ein Teil dieser Varianten zum Einsatz kommen kann. Gemäß einer ersten Variante kann der Benutzer mit der entsprechenden App auf dem Mobiltelefon 2 nachträglich personalisierte Informationen auf dem Display 4 der Chipkarte 1 zur Anzeige bringen. Die personalisierten Informationen, die vom Benutzer über das Display 7 des Telefons 2 spezifiziert werden, können z.B. persönliche Bilder sein, die dieser auf seinem Mobiltelefon gespeichert hat. Ebenso können die Informationen z.B. eine Namensänderung des Benutzers bzw. eine Änderung des Kontos des Benutzers betreffen. Der aktualisierte Name bzw. das aktualisierte Konto werden in diesem Fall auf dem Display 4 der Chipkarte 1 zur Anzeige gebracht.

In einer zweiten Variante kann der Benutzer über die App auf dem Mobiltelefon 2 einen Ton oder eine Tonfolge und gegebenenfalls auch ein Lied festlegen, welches z.B. bei einer Transaktion über den Lautsprecher 6 der Chipkarte 1 ausgegeben wird. In einer dritten Variante besteht auch die Möglichkeit, dass das Aufleuchten der LEDs 5 und insbesondere die Abfolge der aufleuchtenden LEDs auf der Chipkarte 1 durch den Benutzer konfiguriert wird. Das Aufleuchten der LEDs kann wiederum bei Durchführung einer Transaktion veranlasst werden.

Gemäß einer vierten Variante, die bereits oben erwähnt wurde, kann durch den Benutzer auch die Aktualisierung von Software bzw. anderweitigen Daten, die von einer weiteren Instanz stammen, auf der Chipkarte veranlasst werden. Im Besonderen hat dabei der Herausgeber und/oder Hersteller der Chipkarte die Möglichkeit, die Karte nachträglich mittels Softwareaktualisierungen bzw. aktualisierten Einstellungen bzw. Sicherheits-Credentials zu individualisieren.

Die weitere Instanz kann z.B. ein Kreditinstitut bzw. eine Bank sein. In diesem Fall werden die aktualisierten Daten bzw. die aktualisierte Software von einem dem Kreditinstitut zugeordneten Server auf das Mobiltelefon 2 geladen, welches diese Daten anschließend über die Kommunikationsverbindung CO an die Chipkarte 1 übermittelt. Die aktualisierten Daten können zum Beispiel auch im Display der Karte dargestellte Informationen sein, wie z.B. Kontoinformationen des Karteninhabers oder gegebenenfalls auch Werbeinformationen für den Karteninhaber. In einer weiteren Variante kann ein fester Bereich des Displays für Informationen der weiteren Instanz reserviert sein, wohingegen der andere Bereich des Displays direkt für vom Karteninhaber spezifizierte Informationen zur Verfügung steht.

Die im Vorangegangenen beschriebenen Ausführungsformen der Erfindung weisen eine Reihe von Vorteilen auf. Insbesondere kann auf einfache Weise eine Individualisierung eines tragbaren Datenträgers mittels Informationen erreicht werden, die direkt von dem Benutzer eines Endgeräts oder gegebenenfalls einer dritten Instanz, wie z.B. dem Herausgeber oder Hersteller des tragbaren Datenträgers, stammen. Durch die Individualisierung des tragbaren Datenträgers erhöht sich seine Nutzung, wodurch die Akzeptanz des tragbaren Datenträgers beim Benutzer verbessert wird.

### Positionsliste

- 1: Chipkarte
- 2: Mobiltelefon
- 3: Chip
- 4: Display der Chipkarte
- 5: LEDs
- 6: Lautsprecher
- 7: Display des Mobiltelefons
- CO: Kommunikationsverbindung
- DA: Daten

## Patentansprüche

1. Verfahren zur Individualisierung eines tragbaren Datenträgers (1), welcher als Chipkarte ausgebildet ist, bei dem
- ein Endgerät (2) in Form eines mobilen Endgerätes, insbesondere eines Mobiltelefons und/oder ein Laptops und/oder eines Tablets, Daten (DA) zur Konfiguration und/oder Aktualisierung von einer oder mehreren Funktionen des tragbaren Datenträgers (1) bereitstellt;
- das Endgerät (2) die Daten (DA) basierend auf einer Eingabe eines Benutzers an einer Benutzerschnittstelle (7) des Endgeräts (2) bereitstellt, wobei die Eingabe des Benutzers die Daten (DA) zur Konfiguration und/oder Aktualisierung der Funktion oder Funktionen des tragbaren Datenträgers (1) spezifiziert und/oder ein Herunterladen der Daten (DA) zur Konfiguration und/oder Aktualisierung der Funktion oder Funktionen des tragbaren Datenträgers (1) von einem Server initiiert;
- die Daten (DA) durch das Endgerät (2) an den tragbaren Datenträger (1) über eine Kommunikationsverbindung (CO) zwischen dem Endgerät (2) und dem tragbaren Datenträger (1) übermittelt werden;
- mittels der an den tragbaren Datenträger (1) übermittelten Daten (DA) eine Konfiguration und/oder Aktualisierung der Funktion oder Funktionen des tragbaren Datenträgers (1) bewirkt wird,
**dadurch gekennzeichnet, dass** die Daten (DA) Informationen umfassen, welche auf einem Display (4) des tragbaren Datenträgers (1) angezeigt werden, wobei die Informationen textuelle Informationen umfassen, wobei die textuellen Informationen persönliche Daten eines Benutzers sind, dem der tragbare Datenträger (1) zugeordnet ist.

2. Verfahren nach Anspruch 1, **dadurch gekennzeichnet, dass** der tragbare Datenträger (1) eine Karte zur Durchführung von monetären Transaktionen und/oder eine Karte zur Ticketbuchung und/oder eine Karte zur Zugangsberechtigung eines Benutzers und/oder ein Sicherheitselement ist.

3. Verfahren nach Anspruch 1, **dadurch gekennzeichnet, dass** die Informationen ein oder mehrere Bilder umfassen.

4. Verfahren nach einem der vorhergehenden Ansprüche, **dadurch gekennzeichnet, dass** durch die Daten (DA) die Art der Ausgabe zumindest eines Signals an dem tragbaren Datenträger (1) festgelegt wird, wobei die Ausgabe des zumindest einen Signals vorzugsweise an ein vorbestimmtes Ereignis gekoppelt ist.

5. Verfahren nach Anspruch 4, **dadurch gekennzeichnet, dass** durch die Daten (DA) die Art der Ausgabe von einem oder mehreren akustischen Signalen festgelegt wird, welche über einen oder mehrere Lautsprecher (6) auf dem tragbaren Datenträger (1) erzeugt werden, und/oder dass durch die Daten (DA) die Art der Ausgabe von einem oder mehreren optischen Signalen festgelegt wird, welche über ein oder mehrere optische Elemente (5) auf dem tragbaren Datenträger (1) erzeugt werden.

6. Verfahren nach einem der vorhergehenden Ansprüche, **dadurch gekennzeichnet, dass** die Daten (DA) eine aktualisierte Software für eine Applikation auf dem tragbaren Datenträger (1) und/oder kryptographische Informationen umfassen und/oder dass die Daten (DA) von einem Herausgeber oder Hersteller des tragbaren Datenträgers stammen.

7. Verfahren nach einem der vorhergehenden Ansprüche, **dadurch gekennzeichnet, dass** die Kommunikationsverbindung zwischen dem Endgerät (2) und dem tragbaren Datenträger (1) eine drahtlose Kommunikationsverbindung und/oder eine drahtgebundene Kommunikationsverbindung umfasst.

8. System zur Individualisierung eines tragbaren Datenträgers (1), welcher als eine Chipkarte ausgebildet ist, umfassend ein Endgerät (2) in Form eines mobilen Endgerätes, insbesondere eines Mobiltelefons und/oder ein Laptops und/oder eines Tablets und den tragbaren Datenträger (1), wobei
- das Endgerät (2) dazu eingerichtet ist die Daten (DA) basierend auf einer Eingabe eines Benutzers an einer Benutzerschnittstelle (7) des Endgeräts (2) bereitstellt, wobei die Eingabe des Benutzers die Daten (DA) zur Konfiguration und/oder Aktualisierung der Funktion oder Funktionen des tragbaren Datenträgers (1) spezifiziert und/oder ein Herunterladen der Daten (DA) zur Konfiguration und/oder Aktualisierung der Funktion oder Funktionen des tragbaren Datenträgers (1) von einem Server initiiert;
- das Endgerät (2) dazu eingerichtet ist, Daten (DA) zur Konfiguration und/oder Aktualisierung von einer oder mehreren Funktionen des tragbaren Datenträgers (1) bereitzustellen und die Daten (DA) an den tragbaren Datenträger (1) über eine Kommunikationsverbindung (CO) zwischen dem Endgerät (2) und dem tragbaren Datenträger (1) zu übermitteln;
- wobei
- der tragbare Datenträger dazu eingerichtet ist, die übermittelten Daten (DA) zu empfangen und mittels dieser Daten (DA) eine Konfiguration und/oder Aktualisierung der Funktion oder Funktionen des tragbaren Datenträgers (1) zu bewirken,
**dadurch gekennzeichnet, dass** die Daten (DA) Informationen umfassen, welche auf einem Display (4) des tragbaren Datenträgers (1) angezeigt werden, wobei die Informationen textuelle Informationen umfassen, wobei die textuellen Informationen persönliche Daten eines Benutzers sind, dem der tragbare Datenträger (1) zugeordnet ist.

9. System nach Anspruch 8, **dadurch gekennzeichnet, dass** das System zur Durchführung eines Verfahrens nach einem der Ansprüche 1 bis 7 eingerichtet ist.

10. Tragbarer Datenträger zur Verwendung in einem Verfahren nach einem der Ansprüche 1 bis 7, **dadurch gekennzeichnet, dass** der tragbare Datenträger als Chipkarte ausgebildet ist und dazu eingerichtet ist, von einem Endgerät (2) Daten (DA) zur Konfiguration und/oder Aktualisierung von einer oder mehreren Funktionen des tragbaren Datenträgers (1) über eine Kommunikationsverbindung (CO) zwischen dem Endgerät (2) und dem tragbaren Datenträger (1) zu empfangen und mittels dieser Daten (DA) eine Konfiguration und/oder Aktualisierung der Funktion oder Funktionen des tragbaren Datenträgers (1) zu bewirken, wobei die Daten (DA) Informationen umfassen, welche auf einem Display des Datenträgers angezeigt werden, wobei die Informationen textuelle Informationen umfassen, wobei die textuellen Informationen persönliche Daten eines Benutzers sind, dem der tragbare Datenträger zugeordnet ist.

## Claims

1. A method for individualizing a portable data carrier (1), which is configured as a chip card, in which
- an end device (2) in the form of a mobile end device, in particular of a mobile telephone and/or a laptop and/or a tablet, supplies data (DA) for configuring and/or updating one or more functions of the portable data carrier (1);
- the end device (2) supplies the data (DA) on the basis on an input of a user in a user interface (7) of the end device (2), wherein the input of the user specifies the data (DA) for configuring and/or updating the function or functions of the portable data carrier (1) and/or initiates a downloading of the data (DA) from a server for configuring and/or updating the function or functions of the portable data carrier (1);
- the data (DA) are transmitted by the end device (2) to the portable data carrier (1) via a communication connection (CO) between the end device (2) and the portable data carrier (1);
- a configuring and/or updating of the function or functions of the portable data carrier (1) is effectuated by means of the data (DA) transmitted to the portable data carrier (1),
**characterized in that** the data (DA) comprise information items which are displayed on a display (4) of the portable data carrier (1), wherein the information items comprise textual information items, wherein the textual information items are personal data of a user whom the portable data carrier (1) is associated with.

2. The method according to claim 1, **characterized in that** the portable data carrier (1) is a card for carrying out monetary transactions and/or a card for booking tickets and/or a card for authorizing access of a user and/or a security element.

3. The method according to claim 1, **characterized in that** the information items comprise one or more images.

4. The method according to any of the preceding claims, **characterized in that** the kind of the output of at least one signal on the portable data carrier (1) is defined by the data (DA), wherein the output of the at least one signal is preferably coupled to a predetermined event.

5. The method according to claim 4, **characterized in that** by the data (DA) the kind of the output of one or more acoustic signals is defined which are generated via one or more loudspeakers (6) on the portable data carrier (1), and/or that through the data (DA) the kind of the output of one or more optical signals is defined which are generated via one or more optical elements (5) on the portable data carrier (1).

6. The method according to any of the preceding claims, **characterized in that** the data (DA) comprise an updated software for an application on the portable data carrier (1) and/or cryptographic information items and/or that the data (DA) stem from an issuer or manufacturer of the portable data carrier.

7. The method according to any of the preceding claims, **characterized in that** the communication connection between the end device (2) and the portable data carrier (1) comprises a wireless communication connection and/or a wire-based communication connection.

8. A system for individualizing a portable data carrier (1) which is configured as a chip card, comprising an end device (2) in the form of a mobile end device, in particular of a mobile telephone and/or a laptop and/or a tablet, and the portable data carrier (1), wherein
- the end device (2) is arranged to supply the data (DA) on the basis on an input of a user in a user interface (7) of the end device (2), wherein the input of the user specifies the data (DA) for configuring and/or updating the function or functions of the portable data carrier (1) and/or initiates a downloading of the data (DA) from a server for configuring and/or updating the function or functions of the portable data carrier (1).
- the end device (2) is arranged to supply data (DA) for configuring and/or updating one or more functions of the portable data carrier (1) and to transmit the data (DA) to the portable data carrier (1) via a communication connection (CO) between the end device (2) and the portable data carrier (1);
- wherein the portable data carrier is arranged to receive the transmitted data (DA) and to effectuate by means of these data (DA) a configuring and/or updating of the function or functions of the portable data carrier (1).
**characterized in that** the data (DA) comprise information items which are displayed on a display (4) of the portable data carrier (1), wherein the information items comprise textual information items, wherein the textual information items are personal data of a user whom the portable data carrier (1) is associated with.

9. The system according to claim 8, **characterized in that** the system is arranged for carrying out a method according to any of claims 1 to 7.

10. A portable data carrier for the employment in a method according to any of claims 1 to 7, **characterized in that** the portable data carrier is arranged as a chip card and configured to receive from an end device (2) data (DA) for configuring and/or updating one or more functions of the portable data carrier (1) via a communication connection (CO) between the end device (2) and the portable data carrier (1) and to effectuate by means of these data (DA) a configurating and/or updating of the function or functions of the portable data carrier (1). wherein the data (DA) comprise information items which are displayed on a display of the data carrier, wherein the information items comprise textual information items, wherein the textual information items are personal data of a user whom the portable data carrier is associated with.

## Revendications

1. Procédé d'individualisation d'un support de données (1) portable réalisé en tant que carte à puce, dans lequel
- un terminal (2) sous forme d'un terminal mobile, en particulier sous forme d'un téléphone mobile et/ou d'un ordinateur portable et/ou d'une tablette, met à disposition des données (DA) pour la configuration et/ou l'actualisation d'une ou de plusieurs fonctions du support de données (1) portable ;
- le terminal (2) met les données (DA) à disposition sur la base d'une entrée d'un utilisateur à une interface utilisateur (7) du terminal (2), cependant que 1' entrée de l'utilisateur spécifie les données (DA) pour la configuration et/ou l'actualisation de la ou des fonctions du support de données (1) portable et/ou initie un téléchargement, par un serveur, des données (DA) pour la configuration et/ou l'actualisation de la ou des fonctions du support de données (1) portable ;
- les données (DA) sont transmises par le terminal (2) au support de données (1) portable par le biais d'une liaison de communication (CO) entre le terminal (2) et le support de données (1) portable ;
- au moyen des données (DA) transmises au support de données (1) portable, une configuration et/ou actualisation de la ou des fonctions du support de données (1) portable est engendrée,
**caractérisé en ce que** les données (DA) comprennent des informations qui sont affichées sur un écran (4) du support de données (1) portable, cependant que les informations comprennent des informations textuelles, cependant que les informations textuelles sont des données personnelles d'un utilisateur auquel le support de données (1) portable est associé.

2. Procédé selon la revendication 1, **caractérisé en ce que** le support de données (1) portable est une carte pour l'exécution de transactions monétaires et/ou une carte pour la réservation de billets et/ou une carte pour l'autorisation d'accès d'un utilisateur et/ou un élément de sécurité.

3. Procédé selon la revendication 1, **caractérisé en ce que** les informations comprennent une ou plusieurs images.

4. Procédé selon une des revendications précédentes, **caractérisé en ce que**, par les données (DA), le mode d'émission d'au moins un signal au support de données (1) portable est défini, cependant que l'émission du au moins un signal est de préférence liée à un événement prédéterminé.

5. Procédé selon la revendication 4, **caractérisé en ce que**, par les données (DA), le mode d'émission de un ou plusieurs signaux acoustiques générés sur le support de données (1) portable par le biais d'un ou de plusieurs haut-parleurs (6) est défini, et/ou que, par les données (DA), le mode d'émission de un ou plusieurs signaux optiques générés sur le support de données (1) portable par le biais d'un ou de plusieurs éléments optiques (5) est défini.

6. Procédé selon une des revendications précédentes, **caractérisé en ce que** les données (DA) comprennent un logiciel mis à jour pour une application sur le support de données (1) portable et/ou des informations cryptographiques et/ou que les données (DA) proviennent d'un éditeur ou fabricant du support de données portable.

7. Procédé selon une des revendications précédentes, **caractérisé en ce que** la liaison de communication entre le terminal (2) et le support de données (1) portable est une liaison de communication sans fil et/ou comprend une liaison de communication filaire.

8. Système destiné à l'individualisation d'un support de données (1) portable réalisé en tant qu'une carte à puce, comprenant un terminal (2) sous forme d'un terminal mobile, en particulier sous forme d'un téléphone mobile et/ou d'un ordinateur portable et/ou d'une tablette, et le support de données (1) portable, cependant que
- le terminal (2) est configuré pour mettre les données (DA) à disposition sur la base d'une entrée d'un utilisateur à une interface utilisateur (7) du terminal (2), cependant que l'entrée de l'utilisateur spécifie les données (DA) pour la configuration et/ou l'actualisation de la ou des fonctions du support de données (1) portable et/ou initie un téléchargement, par un serveur, des données (DA) pour la configuration et/ou l'actualisation de la ou des fonctions du support de données (1) portable ;
- le terminal (2) est configuré pour mettre des données (DA) à disposition pour la configuration et/ou l'actualisation d'une ou de plusieurs fonctions du support de données (1) portable et pour transmettre les données (DA) au support de données (1) portable par le biais d'une liaison de communication (CO) entre le terminal (2) et le support de données (1) portable ;
- cependant que
- le support de données portable est configuré pour recevoir les données (DA) transmises et pour, au moyen de ces données (DA), engendrer une configuration et/ou actualisation de la ou des fonctions du support de données (1) portable,
**caractérisé en ce que** les données (DA) comprennent des informations qui sont affichées sur un écran (4) du support de données (1) portable, cependant que les informations comprennent des informations textuelles, cependant que les informations textuelles sont des données personnelles d'un utilisateur auquel le support de données (1) portable est associé.

9. Système selon la revendication 8, **caractérisé en ce que** le système est configuré pour l'exécution d'un procédé selon une des revendications de 1 à 7.

10. Support de données portable destiné à l'utilisation dans un procédé selon une des revendications de 1 à 7, **caractérisé en ce que** le support de données portable est réalisé en tant que carte à puce et est configuré pour recevoir de la part d'un terminal (2) des données (DA) pour la configuration et/ou l'actualisation d'une ou de plusieurs fonctions du support de données (1) portable par le biais d'une liaison de communication (CO) entre le terminal (2) et le support de données (1) portable, et pour, au moyen de ces données (DA), engendrer une configuration et/ou actualisation de la ou des fonctions du support de données (1) portable, cependant que les données (DA) comprennent des informations qui sont affichées sur un écran du support de données, cependant que les informations comprennent des informations textuelles, cependant que les informations textuelles sont des données personnelles d'un utilisateur auquel le support de données portable est associé.
